# EUROPEAN PATENT APPLICATION

(11) **EP 2 119 729 A1**
(43) Date of publication of application: **18.11.2009**
(21) Application number: 09159323.6
(22) Date of filing: 04.05.2009
(51) Int. Cl.: C08C 19/14, C08L 15/02, C08K 3/34

(54) **Rubber composition and pneumatic tire**

(30) Priority: 15.05.2008 US 120812
(71) Applicant: The Goodyear Tire & Rubber Company, Akron, OH 44316-0001 (US)
(72) Inventor: Kaszas, Gabor, Akron, OH 44313 (US)
(74) Representative: Kutsch, Bernd

(57) **Abstract**

The present invention is directed to a method of making a rubber composition, comprising the steps of:
obtaining a diene-based elastomer selected from the group consisting of natural rubber, synthetic polyisoprene, polybutadiene, solution polymerized styrene-butadiene rubber (SSBR), and emulsion polymerized styrene-butadiene rubber (ESBR);
mixing the diene-based elastomer with a halogenating agent to form an intermediate elastomer; and
mixing the intermediate elastomer with a carbon black.

There is further disclosed a rubber composition made by the foregoing method, and a pneumatic tire comprising the rubber composition.

## Description

### Background of the Invention

Polymer - filler interaction has a profound effect on the physical properties of vulcanisates. This interaction regulates the degree of dispersion of the filler, the formation of an elastomer-filler interface and the filler-filler network. All these ultimately will determine the essential physical properties of the compound such as stress-strain properties, energy loss under cyclic load, abrasion resistance, and tear propagation resistance.

Polymer-filler interaction is predetermined by the properties of the polymer (monomer type, co-monomer sequence distribution and molecular architecture) and the filler (chemical nature, particle size, surface area, aggregate structure and surface activity). Introduction of functional groups to the elastomer is one option to improve polymer-filler interaction. Use of silane coupling agents in conjunction with silica fillers is another option. Various grades of carbon black have differing abilities to interact with elastomers.

There is, therefore, a need for an improved interaction of elastomers with fillers.

### Summary of the Invention

The present invention is directed to a method of making a rubber composition according to claim 1, a rubber composition according to claim 6 and a pneumatic tire according to claim 11.

Dependent claims refer to preferred embodiments of the invention.

### Brief Description the Drawings

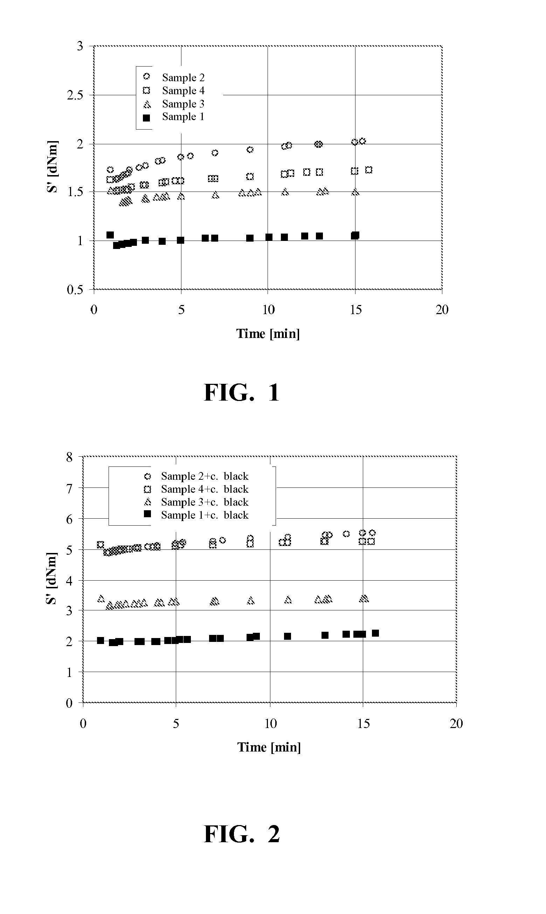

Figures 1 through 16 each present data in graphical form illustrating cure and viscoelastic properties of various embodiments of the present invention.

### Description of the Invention

There is disclosed a method of making a rubber composition, comprising the steps of:
obtaining a diene-based elastomer selected from the group consisting of natural rubber, synthetic polyisoprene, polybutadiene, solution polymerized styrene-butadiene rubber (SSBR), and emulsion polymerized styrene-butadiene rubber (ESBR);
mixing the diene-based elastomer with a halogenating agent to form an intermediate elastomer; and
mixing the intermediate elastomer with a carbon black.

There is further disclosed a rubber composition made by the foregoing method, and a pneumatic tire comprising the rubber composition.

The functionalization method disclosed herein belongs to the post polymerization functionalization category. It is achieved by the introduction of small amount of conjugated diene in isoprene or butadiene based polymers to facilitate reaction between the polymer and carbon black, which carries at least one functional group capable to interact or react with the filler.

Formation of conjugated dienes and trienes can be achieved by the addition of small amounts of iodine or mild brominating agent to isoprene or butadiene based polymers. The reaction scheme leading to the formation of conjugated diene are shown by Scheme 1. The conjugated diene may then interact with surface groups on carbon black.

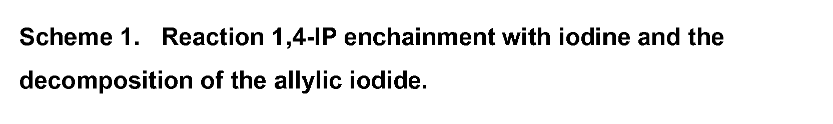

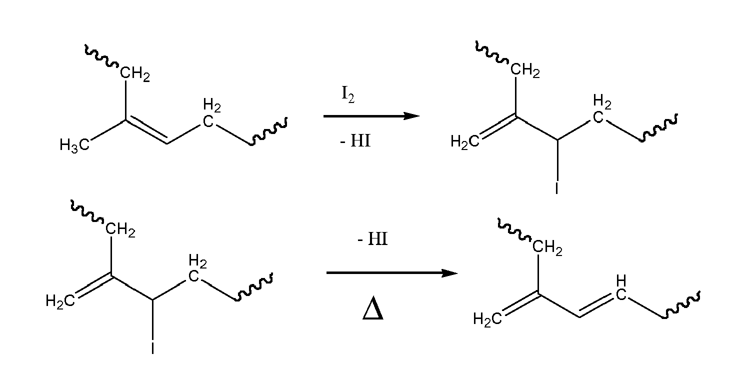

Elastomers that may be modified by the method of the present invention include any diene-based elastomers. The phrases "rubber or elastomer containing olefinic unsaturation" or "diene based elastomer" are used interchangeably and are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic diene-based elastomers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred diene-based elastomers that may be functionalized are polyisoprene (natural or synthetic), polybutadiene and SBR, both emulsion (ESBR) and solution (SSBR) polymerized varieties.

In the first step of the method, the diene-based elastomer is mixing with a halogenating agent. Suitable halogenated agents include iodine, bromine, 1,3-dibromo-5,5-dimethyl hydantoin, and N-bromosuccinimide. In one embodiment, the halogenating agent is iodine.

In one embodiment, the halogenating agent added to the diene-based elastomer in an amount ranging from 0.1 to 2 parts by weight of halogenating agent per 100 parts by weight of diene-based elastomer (phr). In another embodiment, the halogenating agent added to the diene-based elastomer in an amount ranging from 0.25 to 1.5 parts by weight of halogenating agent per 100 parts by weight of diene-based elastomer (phr).

The diene based elastomer is mixed with the halogenated in mixing apparatus suitable for mixing rubber, for example, in a Banbury® type mixer, laboratory mixer, rubber mill, extruder, or the like. The elastomer and halogenating agent are mixed starting at a temperature ranging from ambient to 160°C, preferably from 30°C to 130°C and even more preferably from 60°C to 100°C for a period of one to two minutes. Calcium stearate or other suitable acid acceptor may be added to react with halogen by products generated during the reaction. The calcium stearate may be added subsequent to the first mix step, with an additional mixing time of one to two minutes to form an intermediate elastomer, at least part of which comprises a conjugated diene. In one embodiment, the acid acceptor may be added in an amount ranging from 1 to 10 phr. In another embodiment, the acid acceptor may be added in an amount ranging from 2 to 5 phr.

After mixing the diene-based elastomer with the halogenating agent and optionally the acid acceptor, the intermediate elastomer is mixed with a carbon black. Commonly employed carbon blacks can be used in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

The intermediate elastomer is mixed with the carbon black in mixing apparatus suitable for mixing rubber, for example, in a Banbury® type mixer, laboratory mixer, rubber mill, extruder, or the like. The elastomer and carbon black are mixed starting at ambient or higher temperature for a period of one to three minutes to obtain the mixture.

The modified elastomer and carbon black may then be mixed with various rubber compounding additives as are known in the art, to produce a rubber composition suitable for various applications such as tires, hoses, belts, and the like. In particular, the functionalized elastomer may be mixed with silica or carbon black to obtain tire compounds with improved silica or carbon black interaction.

In addition to the modified elastomer, the rubber composition may contain additional diene-based elastomers. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium initiation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210, 243; silicas available from Rhodia, with, for example, designations of Z1165MP and Z165GR and silicas available from Degussa AG with, for example, designations VN2 and VN3.

Other fillers may be used in the rubber composition including, but not limited to, particulate fillers including ultra high molecular weight polyethylene (UHMWPE), crosslinked particulate polymer gels including but not limited to those disclosed in US-B- 6,242,534; US-B- 6,207,757; US-B- 6,133,364; US-B-6,372,857; US-B- 5,395,891; or US-B- 6,127,488, and plasticized starch composite filler including but not limited to that disclosed in US-B- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-_{S}n-Alk-Z I

in which Z is selected from the group consisting of 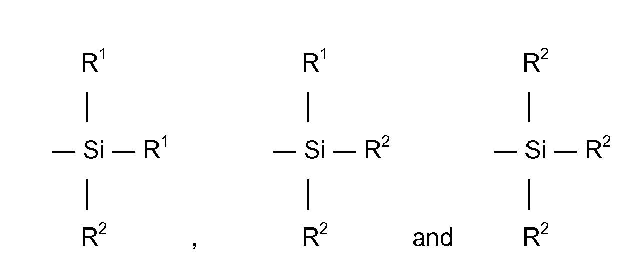 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 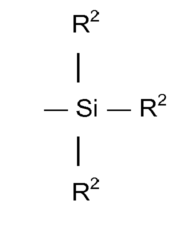 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to10 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of a pneumatic tire. For example, the rubber component may be a tread (including tread cap and tread base), sidewall, apex, chafer, chipper, flipper, sidewall insert, wirecoat or innerliner. In one embodiment, the component is a tread.

The pneumatic tire of the present invention may be a race tire, passenger tire, aircraft tire, agricultural, earthmover, off-the-road, or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Examples

For the characterization of polymer-filler interaction in the following examples, two types of dynamic measurements were used. One is the measurement of the Payne effect and the other is the measurement of filler flocculation.

The Payne effect is the nonlinear dynamic mechanical property of elastomers in the presence of filler first studied by Payne, Appl. Polym. Sci., 6, 57 (1962). It is generally associated with the breakdown and agglomeration of filler particles. Filler-matrix interactions are also thought to be contributing factors to the Payne effect. Such processes are the slippage of entanglements between bound rubber and the mobile rubber phase, molecular surface slippage or rearrangement and release of trapped rubber within the filler network. The magnitude of strain dependence of dynamic moduli increases with decreasing molecular weight and strongly reduced by increasing polymer-filler interaction, i.e, by the use of coupling agents. See, e.g., G. Heinrich et al., Advances in Polymer Science, 160, 1436-5030 (2002); S.S. Sternstein et al., Macromolecules, 35, 7262-7273 (2002); Ai-Jun Zhu et al., Composite Science and Technology, 63, 1113-1126 (2003); J.D. Ulmer et al., Rubber Chem. & Techn., 71(4), 637-667 (1998); C. Gauthier et al., Polymer, 45, 2761-2771 (2003). Therefore measurement of Payne effect is highly suitable to quantify polymer-filler interactions.

Flocculation of filler particles after mixing results in a decrease of electric resistance and an increase of compound stiffness or Payne effect. It is thought to be a result of the formation of carbon black agglomerates by the Brownian movement of aggregates assisted by the relaxation of rubber matrix. See, e.g., G. G. Bohm et al., Journal of Applied Polymer Science, 55, 1041-1050 (1995). Alternatively, it is believed to be the result of increasing percolating cluster size due to the formation of polymer bridges between neighboring aggregates. See, e.g., G. A. Schwartz et al., Polymer 44, 7229-7240 (2003). Regardless of the mechanism, increasing polymer-filler interaction should reduce rate of flocculation by restricting aggregate movement and/or formation of additional polymer bridges between aggregates. Filler flocculation can easily be monitored by measuring the increase of compound stiffness (low strain storage modulus) with time at elevated temperature.

### Experimental Methods

The modification of polymers and the shearing of the controls were carried out in a 300 cm³ Rheomix® 3000E mixer head attached to a Haake Buchler HBI System 90 drive unit. Fill factor was set at 73%.

Addition of carbon black and oil to the polymers (50 phr black and 20 phr oil) was done using a HaakeBuchler System 40 drive unit equipped with a 75 ml Rheomixer® mixer head or using the 300 cm³ Rheomix® 3000E mixer head attached to a Haake Buchler HBI System 90 drive unit. Fill factor was 73%.

All mixes were refined on a warm mill using 1/8" gap.

Size-exclusion chromatography (SEC) was performed using a Wyatt Technologies miniDawn light scattering detector coupled with a Hewlett Packard 1047A refractive index detector. Two Polymer Laboratories C microgel columns in series were utilized with tetrahydrofuran as the carrier solvent at a flow rate of 0.7 ml/min and a column temperature of 40°C. Sample preparation involved filtering a 0.12 wt% solution of polymer in THF through a 0.45 µm filter prior to injection. Data was processed using the ASTRA software of Wyatt Technology.

Rheological measurements were done using the Alpha Technology RPA 2000 instrument. Filler flocculation measurements were done at 160°C using 0.28 % strain and 1.667 Hz. Strain sweeps were conducted at 40°C at 1 Hz frequency. Strain was varied from 0.28% to 200%.

### Example 1

This example illustrates the effect of compounding carbon black with an elastomer functionalized according to the present invention. For the experiments SSBR was used. In addition to N,N'-m-phenylene-bis-maleamic acid, maleamic acid (MAAc) was also tested as a dienophile.

A set of modified samples was made using 100°C as starting temperature. Concentration of chemicals used is listed in Table 1. Chemical treatment of SSBR was carried out in a 300 ml mixer head using the following procedure. At 20 rpm rotor speed first the rubber was loaded to the mixer followed by the addition of iodine flakes. These were mixed for two minutes at 60 rpm rotor speed. During this mixing step the temperature increased from 100°C to 123-124°C. Next CaSt₂ was added at 20 rpm and the ingredients were mixed for another one minute at 60 rpm. This was followed by the addition of the dienophile, N,N'-(m-phenylene)bismaleamic acid or MAAc, at 20 rpm and a final mixing step lasting for three minutes and using 60 rpm. Typical dump temperature was 131-132°C.

The samples modified with N,N'-(m-phenylene)bismaleamic acid and MAAc were complemented with three controls. The first control Sample 1 was made by adding 2.89 phr CaSt₂ to SSBR and exposing the sample to the exact same mixing procedure used for the preparation of the modified samples. The second control Sample 4 was made by adding iodine and CaSt₂ to SSBR. This sample was prepared in order to determine if the conjugated diene generated by iodine had an interaction with carbon black on its own. The third control Sample 5 was the raw SSBR polymer.

Table 2 lists the molecular weight averages of the samples. Shearing SSBR in the mixer had no significant effect on the molecular weight averages. A slight breakdown is indicated by the results. Iodine treatment of the samples resulted in an increase of molecular weight averages. All three molecular weight averages showed an increase. While Mn only increased by 17%, Mz doubled suggesting that molecular weight increase occurred due to branching. Addition of the two different types of the dienophile,

**Table 1**

| Sample No. | 1 | 2 | 3 | 4 | 5 |
|---|---|---|---|---|---|
| Type | control | inv | inv | control | control |
| I₂ [phr] | 0 | 1.02 | 1.02 | 1.02 | 0 |
| I₂ [mmol/kg] | 0 | 40 | 40 | 40 | 0 |
| CaSt₂ [phr] | 2.89 | 2.89 | 2.89 | 2.89 | 0 |
| CaSt₂ [mmol/kg] | 40 | 40 | 40 | 40 | 0 |
| MPBMA¹ [phr] | 0 | 1.22 | 0 | 0 | 0 |
| MPBMA [mmol/kg] | 0 | 40 | 0 | 0 | 0 |
| MAAc² [phr] | 0 | 0 | 0.46 | 0 | 0 |
| MAAc [mmol/kg] | 0 | 0 | 40 | 0 | 0 |

| | | | | | |
|---|---|---|---|---|---|
| ¹ N, N'-(m-phenylene) bismaleamic acid ² maleamic acid | | | | | |

the bi-functional N,N'-(m-phenylene)bismaleamic acid and the mono-functional MAAc, did not seem to alter the molecular weight increase regardless of its functionality. This implies that the branching occurred via the Diels-Alder reaction of two conjugated diene structures or a conjugated structure and a 1,4 or 1,2 butadiene enchainment.

**Table 2**

| Sample No. | Mₙ | M_{w} | M_{z} | M_{w}/Mₙ |
|---|---|---|---|---|
| | [kDalton] | [kDalton] | [kDalton] | |
| 1 | 118 | 193 | 326 | 1.64 |
| 2 | 142 | 283 | 662 | 1.99 |
| 3 | 141 | 281 | 657 | 1.99 |
| 4 | 139 | 295 | 717 | 2.12 |
| 5 | 126 | 206 | 338 | 1.63 |

Heat treatment of the samples for longer times and higher temperatures provided more insight into the undergoing reactions. Figure 1 shows the elastic torque development of the samples recorded during a 16 minutes and 160°Ceat cycle and measured using 1.667 Hz and 7 % strain. Minimum, maximum S' values along with delta torque and % torque increase are listed in Table 3. All three modified samples have a higher starting S' value compared to the control due to the higher molecular weight of these samples. The highest torque increase, albeit relatively small, is shown by the sample modified by N,N'-(m-phenylene)bismaleamic acid. Apparently some further branching occurs at elevated temperature via Diels-Alder reaction between the conjugated diene and the maleamic acid groups of the N,N'-(m-phenylene)bismaleamic acid. The sample treated with iodine only has a marginal torque increase probably via the Diels-Alder reaction of two conjugated diene structures or a conjugated structure and a 1,4 or 1,2 butadiene enchainment. The sample treated with maleamic acid has very limited torque increase, similar to that of the control sample. This suggests that the reaction of the monofunctional maleamic acid with the conjugated diene prevents further crosslinking reaction.

**Table 3**

| Sample No. | 1 | 2 | 3 | 4 |
|---|---|---|---|---|
| S'ₘₐₓ [dNm] | 1.06 | 2.02 | 1.52 | 1.72 |
| S'ₘᵢₙ [dNm] | 0.95 | 1.62 | 1.39 | 1.5 |
| S'ₘₐₓ-S'ₘᵢₙ [dNm] | 0.11 | 0.4 | 0.13 | 0.22 |
| Increase [%] | 11.6 | 24.7 | 9.4 | 14.7 |

### Example 2

In this example the effect of mixing the modified elastomers of Example 1 with carbon black is illustrated. The samples of Example 1 were compounded with 50 phr general purpose tread black and 20 phr medium process oil using the HaakeBuchler System 40 drive unit equipped with a 75 ml Rheomixer® mixer head. The starting temperature was set at 130°C. First the rubber was loaded using 20 rpm followed by the slow addition of the black mixed with oil. This step was carried out at 20 rpm and lasted for 1 minute. The ingredients were mixed for 1.5 minute at 60 rpm followed by a sweep and a second mixing step lasting for 1 minute at 60 rpm. Samples modified with N,N'-(m-phenylene) bismaleamic acid and iodine only gave the highest dump temperature and torque, 162°C, 4800 mg and 169°C, 5900 mg respectively. Sample modified with MAAc gave 156°C and 4200 mg and the control sample 152°C and 3800 mg. Samples dumped at higher torque appeared to be more rough on the surface after milling. The control sample was smooth.

The tendency of the modified samples to branch seemed to diminish in the presence of carbon black. Figure 2 shows the cure curves of the black compounds recorded at 160°C using 7 % strain and 1.667 Hz frequency. Torque increase is small and it appears to be similar for all samples except the N,N'-(m-phenylene)bismaleamic acid modified one. This sample gave about twice as high torque increase than the rest of the samples. The recorded characteristic torque values are listed in Table 4. Most of the observed torque increase is related to the flocculation of the filler particles. At lower strains it is more prevalent than at 7% strain used for these measurements due to the strain dependence of the moduli. Therefore the modulus increase at 0.28 % strain was also determined during the 16 minutes 160°C heat treatment of the samples. Table 5 lists the results.

**Table 4**

| Sample No. | 1 | 2 | 3 | 4 |
|---|---|---|---|---|
| S'ₘₐₓ [dNm] | 2.24 | 5.52 | 3.4 | 5.24 |
| S'ₘᵢₙ [dNm] | 1.94 | 4.84 | 3.16 | 4.89 |
| S'ₘₐₓ-S'ₘᵢₙ [dNm] | 0.30 | 0.68 | 0.24 | 0.35 |
| Increase [%] | 15 | 14 | | 7 |
| G' (0.83Hz, 100°C, 15%) [kPa] | 192 | 467 | 327 | 469 |

**Table 5**

| Sample No. | 1 | 2 | 3 | 4 |
|---|---|---|---|---|
| G'ₘₐₓ [dNm] | 0.31 | 0.55 | 0.40 | 0.54 |
| G'ₘᵢₙ [dNm] | 0.62 | 0.70 | 0.51 | 0.65 |
| G'ₘₐₓ-G'ₘᵢₙ [dNm] | 0.32 | 0.15 | 0.11 | 0.11 |
| Increase [%] | 103 | 28 | 26 | 21 |

According to the results listed in Table 5, the elastic modulus of the control compound doubled. In contrast, all the modified samples displayed a less significant modulus increase. Their modulus increased by 25%. This implies that all modified samples had a stronger interaction with black due to their respective functional groups. The most surprising is the sample modified with iodine only. This sample contains no acidic or amine groups which may interact with the polar surface groups of the carbon black as it may be the phenomenon in case of the N,N'-(m-phenylene)bismaleamic acid or MAAc modified samples. One possible explanation is a Diels-Alder reaction between the conjugated diene groups of the polymer and the quinone like structures of the carbon black. Quinones are particularly common dienophiles along with maleic anhydride. In Diels-Alder reactions another conjugated diene could also act as the dienophile. Therefore, it possible that the reaction takes place between the conjugated diene of the polymer and that of the carbon black. It is also known that condensed aromatic rings could act as a conjugated diene. While benzene, naphthalene and phenanthrene are quite resistant, Diels-Alder reaction proceeds readily with anthracene and with other fused ring systems having at least three linear benzene rings.

Strain sweeps conducted at 40°C on the heat-treated samples indicated the stronger polymer-carbon black interaction as was suggested by the filler flocculation measurements. Strain dependence of G' and G" of the modified samples were measured to be lower than that of the control sample. Figures 3 and 4 show the results. These changes also resulted in a reduced tan δ value in the entire frequency range as shown by Figure 5.

Reduced strain dependence of G' and G" of the modified samples as well as the reduced phase angle compared to the control sample suggests an increased polymer filler interaction.

In case of N,N'-(m-phenylene)bismaleamic acid the likely pathway of polymer-filler interaction is a Diels-Alder reaction between the maleamic acid group of N,N'-(m-phenylene)bismaleamic acid and the carbon black. Chemical modification of carbon black via Diels-Alder reaction, i.e, by reaction with maleic acid derivative has been reported. Experimental observations were substantiated by a model reaction suggesting Diels-Alder reaction between anthracene and maleic dodecylamide.

Interaction of the I₂ modified SSBR with carbon black is surprising and no prior work could be found in the literature investigating the reaction of carbon black with conjugated dienes. A Diels-Alder reaction between the quinone like structure of carbon black and the conjugated diene can be an explanation for the improved polymer-filler interaction. It is well established that a number of functional groups, such as quinones, hydroquinones, carboxylic acids, and lactones, are present at the edges of the graphitic layers planes of the carbon black.

Improved filler-polymer interaction in case of the MAAc modified sample remains obscure as the observed changes, at least in part, can also be a result of the reaction of unreacted conjugated diene with carbon black. However, the low cure activity of the MAAc modified sample compared to the I₂ modified sample indicates that most of the conjugated diene was consumed by MAAc (see Figure 1 and Table 3).

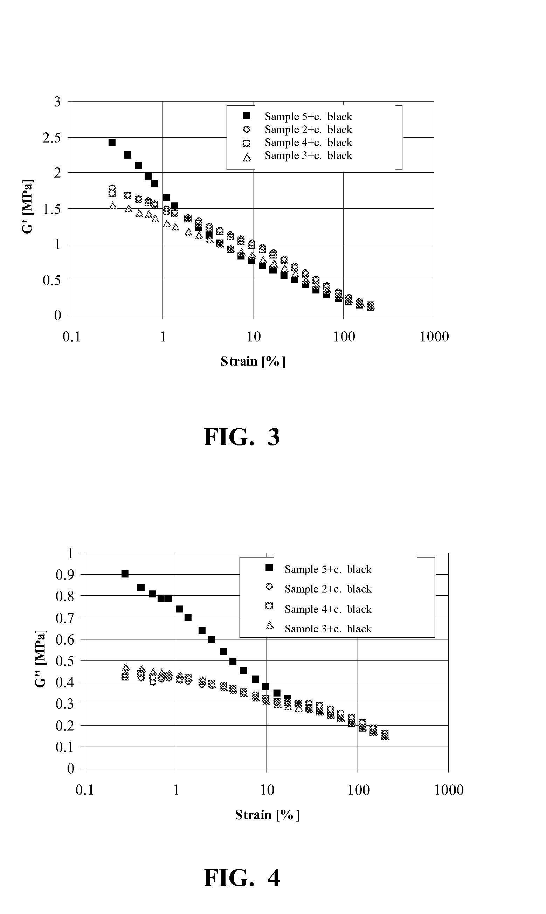

The exact quantification of improvement is difficult based on this sample set due to the higher molecular weight averages of modified samples caused by branching. Reduction of phase angle upon cure is well known. The higher G' values of the modified samples over the control at strain values exceeding 2% (see Figure 3) could also be a result of branching. This cross over of the curves was absent in silica filled compounds. However, in case of carbon black filled emulsion SBR it was shown that increased surface activity of the filler can also result in a cross over of G'.

### Example 3

In this example, the effect of starting temperature on the molecular weight of the modified SSBR is illustrated. As part of the observed changes of Examples 1 and 2 can also be attributed to the higher molecular weight of the modified samples compared to the control sample, a set of modified sample was produced at a reduced temperature.

SSBR was modified in a similar manner as in Examples 1 and 2 except the starting temperature was lowered from 100°C to 60°C. The compositions of Samples 6-10 is shown in Table 6. Also mixing time was reduced from two minutes to one minute after the addition of iodine. The rest of the mixing protocol was unchanged. Table 6a contains the measured molecular weight averages of the modified samples along with the values of previous controls. Apparently these changes in reaction conditions almost completely eliminated molecular weight increase. According to the results only Mz shows some marginal increase over the controls. Mn and Mw values are practically unchanged.

**Table 6**

| Sample No. | 6 | 7 | 8 | 9 | 10 |
|---|---|---|---|---|---|
| Type | control | control | inv | inv | control |
| I₂ [phr] | 0 | 0 | 1.02 | 1.02 | 1.02 |
| I₂ [mmol/kg] | 0 | 0 | 40 | 40 | 40 |
| CaSt₂ [phr] | 0 | 2.89 | 2.89 | 2.89 | 2.89 |
| CaSt₂ [mmol/kg] | 0 | 40 | 40 | 40 | 40 |
| MPBMA¹ [phr] | 0 | 0 | 1.22 | 0 | 0 |
| MPBMA [mmol/kg] | 0 | 0 | 40 | 0 | 0 |
| MAAc² [phr] | 0 | 0 | 0 | 0.46 | 0 |
| MAAc [mmol/kg] | 0 | 0 | 0 | 40 | 0 |

| | | | | | |
|---|---|---|---|---|---|
| ¹ N, N'-(m-phenylene) bismaleamic acid ² maleamic acid | | | | | |

**Table 6a**

| Sample No. | Mₙ | M_{w} | M_{z} | M_{w}/Mₙ |
|---|---|---|---|---|
| | [kDalton] | [kDalton] | [kDalton] | |
| 6 | 126 | 206 | 338 | 1.63 |
| 7 | 118 | 193 | 326 | 1.64 |
| 8 | 130 | 214 | 379 | 1.65 |
| 9 | 124 | 211 | 365 | 1.70 |
| 10 | 126 | 213 | 362 | 1.69 |

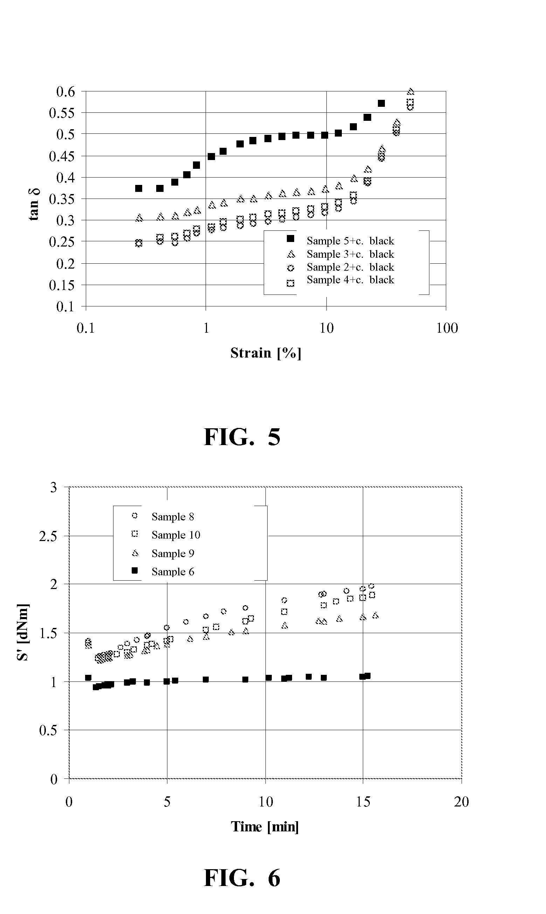

The ability of the modified raw polymers to undergo branching at higher temperatures is shown by Figure 6. Samples were heated to 160°C and torque increase was registered as a function of time using 7% strain at 1.667 Hz. The highest torque increase is shown by the I₂-N,N'-(m-phenylene)bismaleamic acid sample, and the lowest by the I2-MAAc one. Apparently part of the conjugated dienes reacted with the MAAc and this reduced the amount of conjugated diene available for cross-linking reaction.

### Example 4

This example illustrates the effect of mixing carbon black with the samples of Example 3. The samples of Example 3 were compounded with 50 phr general purpose tread black and 20 phr medium process oil using the a 300 cm3 Rheomix® 3000E mixer head attached to a Haake Buchler HBI System 90 drive unit. The starting temperature of the mixing was reduced from 130°C to 100°C in order to avoid branching of the modified samples. To the mixer first half of the carbon black/oil mixture was added followed by the rubber and the remaining of the carbon black/oil mixture. This ensured that carbon black was present at the very beginning of the mixing step, which apparently reduces the cure activity of the modified samples. The ingredients were mixed for 2 minutes at 100 rpm. It was followed by a sweep and a second mixing step lasting for another two minutes and using 100 rpm rotor speed. The dump temperature and the torque registered at the end of the mixing cycles are listed in Table 7.

**Table 7**

| Sample No. | 6 | 8 | 9 | 10 |
|---|---|---|---|---|
| T_{dump} [°C] | 156 | 161 | 159 | 157 |
| Final Torque [mg] | 8600 | 9900 | 9700 | 9600 |

The slightly increased dump temperature and higher final torque obtained with the modified samples indicate a stronger polymer-filler interaction.

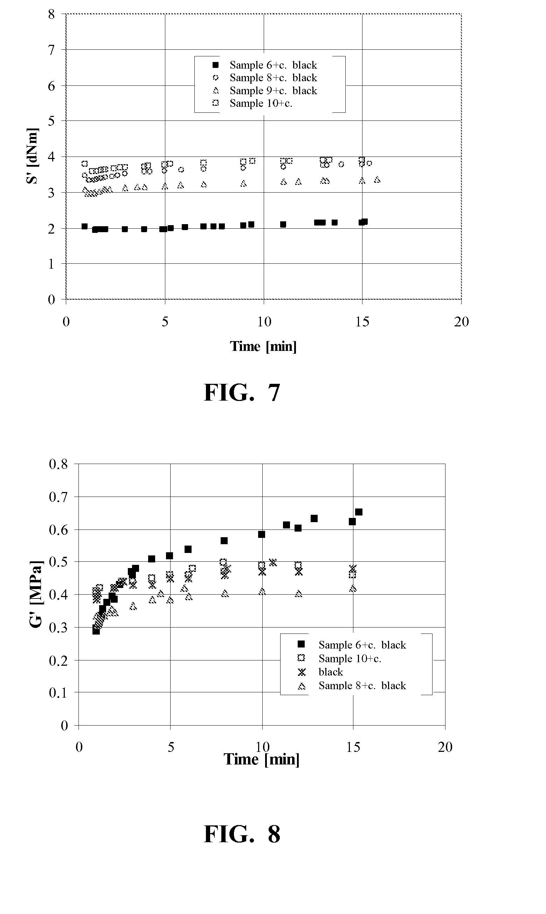

The cure activity of the modified samples has diminished in the presence of carbon black. Figure 7 shows the elastic torque development of the compounds measured at 160°C. Table 8 lists the characteristic torque values along with the G' value measured at 100°C at 15% strain and 0.83 Hz. The higher G' value of the modified samples implies enhanced filler reinforcement achieved by the improved polymer-filler interaction.

**Table 8**

| Sample No. | 6 | 8 | 9 | 10 |
|---|---|---|---|---|
| Type | control | inv | inv | control |
| S'ₘₐₓ [dNm] | 2.16 | 3.8 | 3.35 | 3.9 |
| S'ₘᵢₙ [dNm] | 1.94 | 3.32 | 2.96 | 3.59 |
| S'ₘₐₓ-S'ₘᵢₙ [dNm] | 0.22 | 0.48 | 0.39 | 0.31 |
| Increase [%] | 11 | 14 | 13 | 9 |
| G' (0.83Hz, 100°C, 15%) [kPa] | 188 | 333 | 300 | 362 |

The modified samples showed a reduced low strain storage modulus at 160°C compared to the control sample and their increase with time was significantly reduced as shown by Figure 8. This is a result of enhanced polymer-filler interaction via the functional groups leading to inhibited filler flocculation.

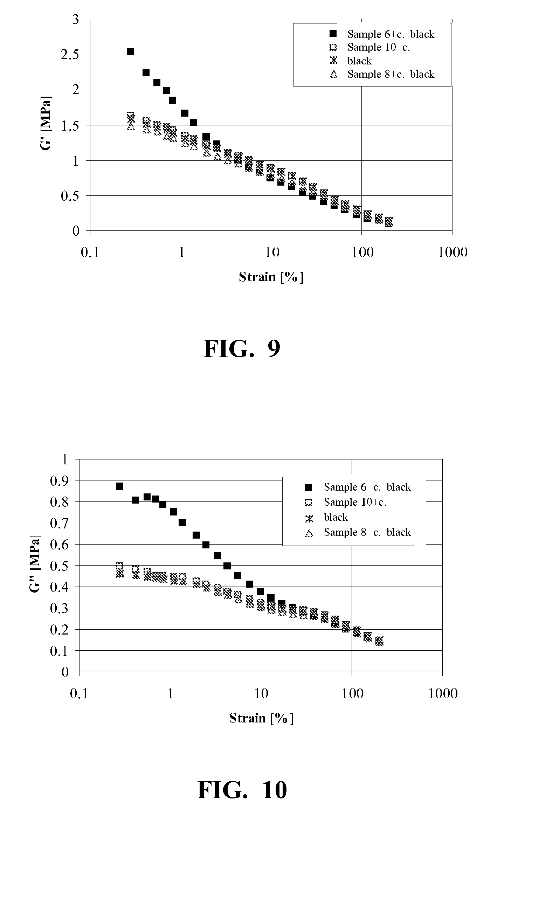

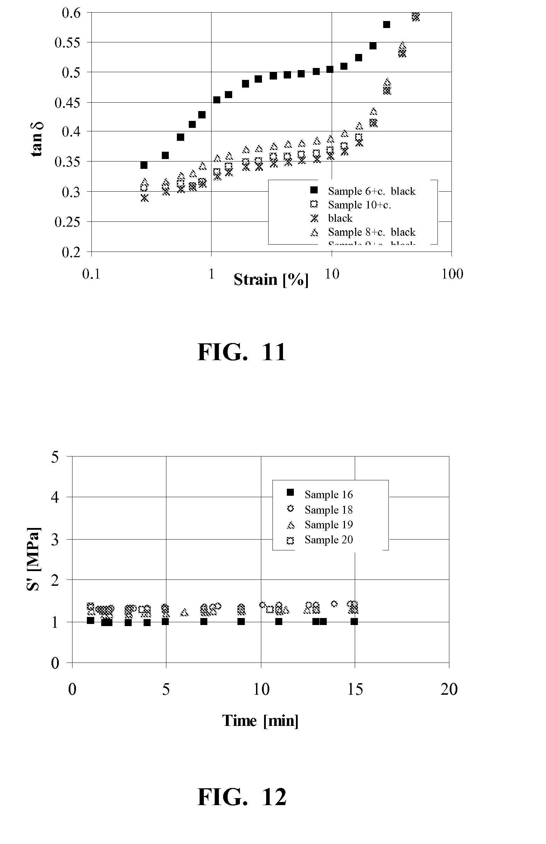

The modification of samples also resulted in a reduced Payne effect compared to the control as indicated by the strain sweeps conducted on the heat-treated samples at 40°C. G' of the modified samples at low strains are lower than that of the control (see Figure 9). For example G' of all modified samples was measured to be 40% lower at 0.28% strain compared to the control. However, G' over 3% strain appears to be somewhat higher than that of the control. This is indicative of an improved reinforcement. Loss modulus of the modified samples was also measured to be lower (see Figure 10). At low strains it is about half of the low strain G" of the control sample. The stronger decrease of G" over G' resulted in a lower tan δ in the entire frequency ranges as shown by Figure 11.

These measurements suggest that polymer-carbon black interaction can be improved by the functionalization method used. Diels-Alder reaction between carbon black and the maleamic group of N,N'-(m-phenylene)bismaleamic acid or the conjugated diene is the likely reason for these improvements.

### Example 5

This example illustrates the modification of a synthetic polyisoprene. Type of chemicals and their concentration was exactly the same as in case of SSBR, as shown in Table 9.

**Table 9**

| Sample No. | 11 | 12 | 13 | 14 | 15 |
|---|---|---|---|---|---|
| Type | control | control | inv | inv | control |
| I₂ [phr] | 0 | 0 | 1.02 | 1.02 | 1.02 |
| I₂ [mmol/kg] | 0 | 0 | 40 | 40 | 40 |
| CaSt₂ [phr] | 0 | 2.89 | 2.89 | 2.89 | 2.89 |
| CaSt₂ [mmol/kg] | 0 | 40 | 40 | 40 | 40 |
| MPBMA¹ [phr] | 0 | 0 | 1.22 | 0 | 0 |
| MPBMA [mmol/kg] | 0 | 0 | 40 | 0 | 0 |
| MAAd² [phr] | 0 | 0 | 0 | 0.46 | 0 |
| MAAc [mmol/kg] | 0 | 0 | 0 | 40 | 0 |

| | | | | | |
|---|---|---|---|---|---|
| ¹ N, N'-(m-phenylene) bismaleamic acid ² maleamic acid | | | | | |

Chemical treatment of synthetic polyisoprene (Natsyn 2200) was carried out in a 300 ml mixer head using the following procedure. At 20 rpm rotor speed first the rubber was loaded to the mixer followed by the addition of iodine flakes. These were mixed for two minutes at 60 rpm rotor speed. During this mixing step the temperature increased from 100°C to 117-122°C. Next CaSt₂ was added at 20 rpm and the ingredients were mixed for another one minute at 60 rpm. This was followed by the addition of the dienophile, N,N'-(m-phenylene)bismaleamic acid or MAAc, at 20 rpm and a final mixing step lasting for three minutes and using 60 rpm. Typical dump temperature was 128-129°C.

GPC measurements revealed a strong molecular weight breakdown during iodine treatment as shown by Table 9a. Mₙ of the iodine treated samples reduced to about half compared to the virgin polyisoprene or the sheared control. Shearing of the polyisoprene also reduced its M_{w} and M_{z} compared to the virgin material.

Breakdown of polyisoprene during I₂ modification has already been reported and molecular weight decrease was found to be proportional to the iodine concentration.

**Table 9a**

| Sample No. | Mₙ | M_{w} | M_{z} |
|---|---|---|---|
| | [kDalton] | [kDalton] | [kDalton] |
| 11 | 450 | 1217 | 3208 |
| 12 | 442 | 862 | 1714 |
| 13 | 228 | 512 | 1307 |
| 14 | 264 | 542 | 1220 |
| 15 | 284 | 579 | 1403 |

As these molecular weight differences can alter the polymer-filler interaction an attempt was made to reduce or eliminate the strong molecular weight brake-down during iodine treatment. It was hypothesized that the breakdown is caused by a radical chain reaction initiated by radicals (R'*) formed by the shear degradation of polyisoprene.

| | |
|---|---|
| Initiation: | R'* + I₂ → R'-I + I* |
| Propagation: | I* + RH → R* + HI |
| | R* + I₂ → R-I + I* |
| Termination: | R* + X* → R-X |

### Example 6

This example illustrates the effect of adding a reaction modifier to the reaction system of Example 5 is illustrated. Samples 16 through 20 were identical to Samples 11 through 15 except for the addition of a stable free radical, 4-Hydroxy-2,2,6,6-tetramethylpiperidine-N-oxyl (HO-TEMPO) to the samples prior to iodine addition in order to stop the chain reaction.

According to the GPC measurements listed in Table 10 the excessive chain degradation due to iodine addition was successfully eliminated. Molecular weight averages of the sheared control and the samples modified by iodine treatment were measured to be about the same.

The sheared control and the modified samples showed no cure activity at 160°C as illustrated by Figure 12. This allowed the comparison of polymer-filler interaction of different functional groups free from molecular weight effects.

**Table 10**

| Sample No. | Mₙ | M_{w} | M_{z} |
|---|---|---|---|
| | [kDalton] | [kDalton] | [kDalton] |
| 16 | 443 | 1031 | 2371 |
| 17 | 379 | 703 | 1455 |
| 18 | 461 | 874 | 1832 |
| 19 | 420 | 799 | 1728 |
| 20 | 422 | 798 | 1677 |

### Example 7

This example illustrate the effect of mixing carbon black with the samples of Example 6.

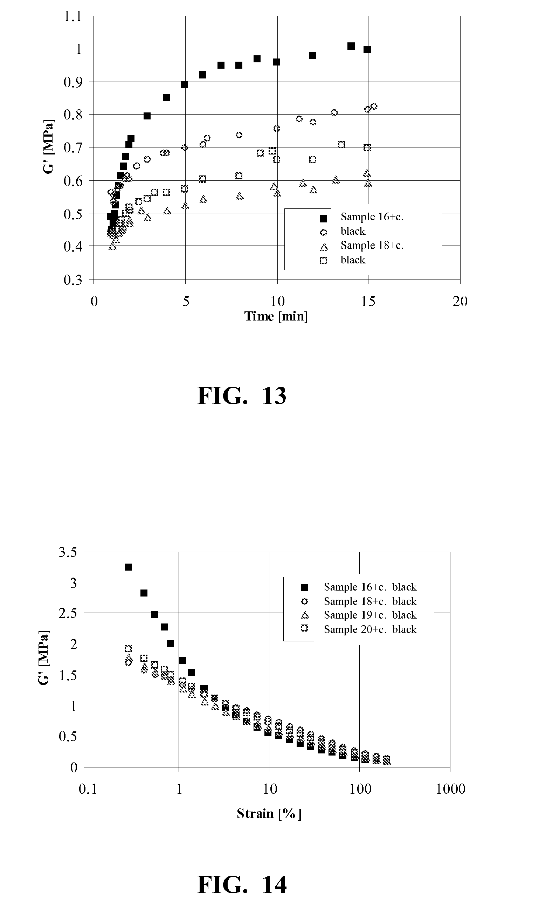

The ability of the functional groups to prevent the flocculation of carbon black was measured at 160°C. Figure 13 shows the increase of the elastic modulus at this temperature measured at 0.28 % strain and 1.667 Hz. The most significant increase is shown by the control sample. G' of the control sample increased by 120%. The rest of the samples show a 50-60% increase indicating a stronger polymer filler interaction compared to the control sample due to the interaction of their respective functional groups with carbon black. These results are very similar to that observed in case of SSBR.

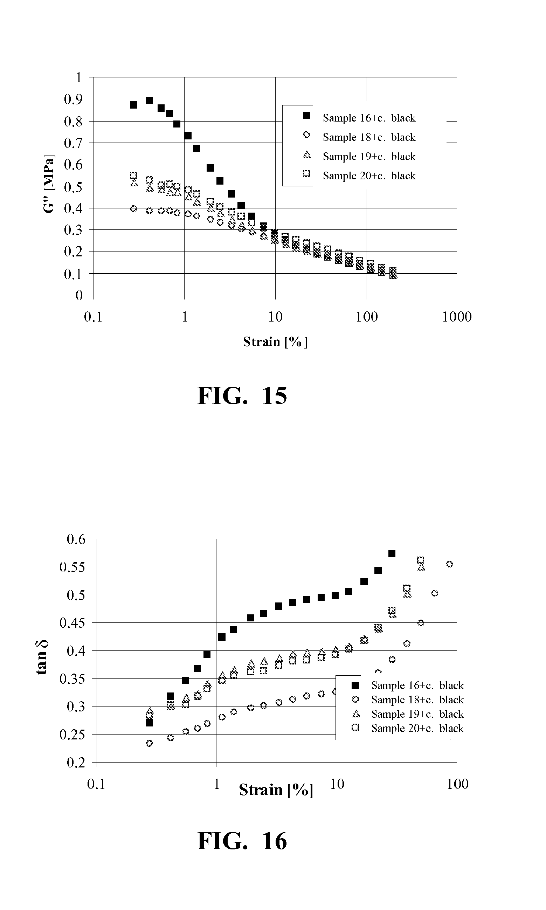

Strain sweeps were carried out on the heat-treated samples at 40°C. The results shown by Figures 14 and 15 reveal that the Payne effect was substantially decreased by all functionalization method. The loss and storage moduli of modified samples appear to be similar and they are less strain dependent than that of the control. Amongst the modified samples, G" of the I₂-N,N'-(m-phenylene)bismaleamic acid sample was measured to be the lowest and this resulted in the lowest tan δ accordingly (see Figure 16).

## Claims

1. A method of making a rubber composition, comprising the steps of:
obtaining a diene-based elastomer selected from the group consisting of natural rubber, synthetic polyisoprene, polybutadiene, solution polymerized styrene-butadiene rubber (SSBR), and emulsion polymerized styrene-butadiene rubber (ESBR);
mixing the diene-based elastomer with a halogenating agent to form an intermediate elastomer; and
mixing the intermediate elastomer with a carbon black.

2. The method of claim 1, wherein the halogenating agent is selected from the group consisting of iodine, bromine, 1,3-dibromo-5,5-dimethyl hydantoin, and N-bromosuccinimide.

3. The method of claim 1 or 2, wherein the halogenating agent is added to the diene-based elastomer in an amount ranging from 0.1 to 2 parts by weight of halogenating agent per 100 parts by weight of diene-based elastomer (phr).

4. The method of claim 3, wherein the halogenating agent is added to the diene-based elastomer in an amount ranging from 0.25 to 1.5 parts by weight of halogenating agent per 100 parts by weight of diene-based elastomer (phr).

5. The method of at least one of the previouos claims, further comprising adding from 1 to 10 phr of an acid acceptor.

6. A rubber composition prepared by the method of claim 1.

7. The rubber composition of claim 6, further comprising at least one additional elastomer.

8. The rubber composition of claim 6 or 7, further comprising from 10 to 150 phr of silica.

9. The rubber composition of at least one of the claims 6 to 8, comprising from 10 to 150 phr of carbon black.

10. The rubber composition of at least one of the claims 6 to 9, wherein the rubber composition is in the form of a tire component.

11. The rubber composition of at least one of the claims 6 to 9, wherein the rubber composition is in the form of a tire tread.

12. A pneumatic tire comprising the tire component of claim 10 or 11.
